# EUROPEAN PATENT SPECIFICATION

(11) **EP 1 962 088 B1**
(45) Date of publication and mention of the grant of the patent: **16.12.2009**
(21) Application number: 08250652.8
(22) Date of filing: 26.02.2008
(51) Int. Cl.: G01N 31/12

(54) **Apparatus and method for detecting incomplete combustion in a combustion analyser**
Vorrichtung und Verfahren zur Erkennung von unvollständiger Verbrennung in einer Verbrennungsanalysevorrichtung
Appareil et procédé pour détecter une combustion incomplète dans un analyseur de combustion

(30) Priority: 26.02.2007 GB 0703689
(43) Date of publication of application: 27.08.2008
(73) Proprietor: Thermo Fisher Scientific Inc., Waltham, MA 02254-9046 (US)
(72) Inventor: Smeets, Louis Marie, 1056 NR Amsterdam (NL); van Doeselaar, Maurice Stephan, 2025 BR Haarlem (NL); Alberti, David Marco Gertruda, 2642 CE Pijnacker (NL)
(74) Representative: Parlett, Peter Michael

(56) References cited:
- DE-A1- 3 012 381
- DE-A1- 4 031 882
- DE-A1- 4 216 508
- US-A- 3 985 505
- US-B1- 6 623 699

## Description

The invention relates to an apparatus and method for detecting incomplete combustion in a combustion analyser.

Combustion analysers are used to determine the concentration of one or more components of a sample, by combusting the sample and analysing the gaseous products for specific oxides. Typically, the carbon, sulphur and/or nitrogen content of the sample is measured by detecting CO₂, SO₂ and NO, respectively.

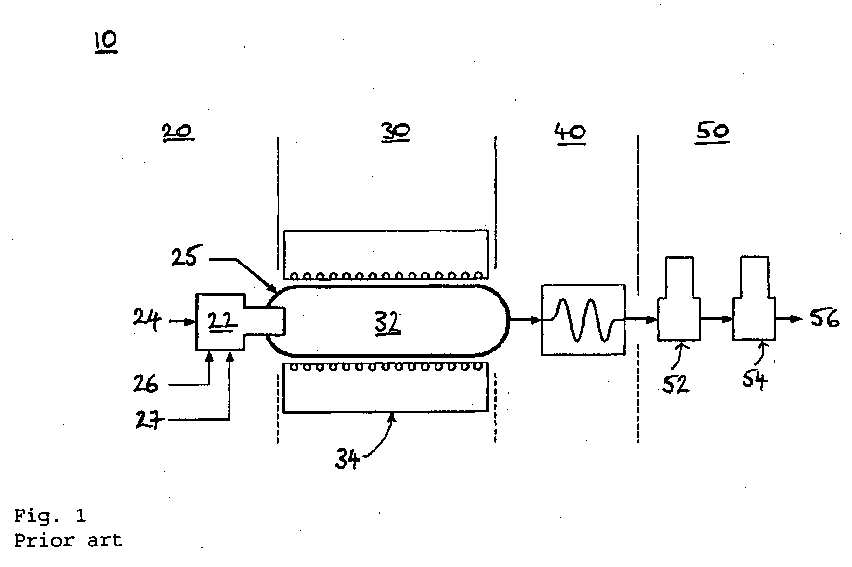

A schematic illustration of a typical combustion analyser is shown in figure 1. The combustion analyser 10 comprises a sample introduction stage 20, a combustion stage 30, a conditioning stage 40, and a detection stage 50. The sample introduction stage 20 comprises a sample introduction apparatus 22, to which are connected a supply of a sample 24, a supply of oxygen 26 and a supply of argon 27. The sample introduction apparatus 22 introduces these fluids into a combustion chamber 32 in a suitable form for combustion to take place. A further supply of oxygen 25 may be provided, directly into the combustion chamber 32. The combustion chamber 32 is heated by an electric heater 34, so that the sample is delivered into an oxygen-rich atmosphere at high temperature, typically around 1000°C. The sample is thereby converted into various combustion products, such as CO₂, H₂O, SO₂, NOₓ, etc. The combustion products leave the combustion chamber 32 and pass through the conditioning stage 40, where processes such as cooling, filtering, drying, etc. take place. The conditioned products then pass through one or more dedicated detectors 52, 54, in which properties of the components of the combustion products may be detected. For example, CO₂ may be detected by absorption of infrared radiation, using a non-dispersive infrared (NDIR) detector; SO₂ may be detected by fluorescence with ultraviolet light, using a light sensor; and NO can be detected from de-excitation processes following its reaction with ozone (O₃) to form excited NO₂, using a chemiluminescence light sensor. The detected signals are indicative of the respective amount of each component of the combustion products and can therefore be related to the composition of the original sample. Finally, the detected combustion products are passed out of the detection stage 50, as waste products 56.

The performance of such a combustion analyser depends strongly on its ability to convert the element(s) of interest in a sample into its/their respective oxide(s). A combustion analyser is able to produce reliable results only if the samples are completely combusted (i.e., the samples are converted entirely into constituent oxides). In practice, however, this standard is not always met. The conditions under which a sample is combusted may be subject to variation due to a number of variables, such as type of sample, sample introduction method, sample input flow rate, oxygen input flow rate, combustion chamber temperature, and sample and oxygen mixing efficiency. Under certain conditions, incomplete combustion of a sample and even soot production can occur. These can result in faulty sample analysis measurements being taken. In addition, these can lead to contamination of parts of the combustion analyser, such as the gas conditioner(s) and the detector(s), necessitating laborious, time-consuming and costly cleaning of the instrument.

At present, incomplete combustion of a sample is detected by visually inspecting the combustion chamber and noticing the formation of soot on the chamber walls and/or by noticing the production of erratic analysis results at the detector(s). Clearly, such detection requires the continued presence of an operator. As an alternative, it is understood that an analyser which incorporates an electro-optical device to monitor optically the formation of soot in the combustion chamber has been proposed. However, by the time such a device has actually detected soot in the combustion chamber, soot production will have already been taking place for some time and components downstream of the chamber are therefore likely to have already become contaminated and in need of cleaning.

In US 6,623,699 is disclosed a combustion analyser having a combustion chamber and gas sensors for both carbon monoxide and carbon dioxide, each sensor providing a signal to an analytical instrument.

Accordingly, it would be desirable to provide an improved or alternative apparatus and method for combustion analysis of samples. This invention aims to provide an apparatus and a method for combustion analysis of a sample which address the above problems.

According to the invention, there is provided a combustion analyser for combustion analysing a sample, the analyser comprising: a combustion chamber for receiving a sample for combustion therein to form combustion products; and a target gas sensor for sensing in the combustion products a target gas characteristic of incomplete combustion of the sample; characterised in that the analyser comprises a controller arranged for receiving a signal indicative of incomplete combustion from the target gas sensor and for adjusting an operating condition of the combustion analyser in response to the received signal.

As stated above, the known indicator for incomplete combustion is the appearance of soot in the combustion chamber. Thus, with previous techniques, incomplete combustion is detected once soot formation has actually begun, by which time some degree of combustion analyser contamination has already taken place. This is a problem which has been present in all commercial combustion analysers to date, even in those improving on the visual detection technique by employing electro-optical detection.

The inventors have discovered another indicator of incomplete combustion, which, importantly, is observable before the formation of soot. The inventors have found that, when the combustion conditions deteriorate so that incomplete combustion of a sample starts to occur, soot is not formed immediately, but there is an intermediate stage during which a number of other, preliminary components are produced and may be detected to indicate the onset of incomplete combustion. The preliminary component(s) may include one or more of carbon monoxide (CO), methane (CH₄), methanal/formaldehyde (CH₂O), and methanol (CH₃OH), among others (it has been noted that there are many components which may be formed from the sample during an incomplete combustion, from various thermally cracked and/or partially oxidised products, down to the smaller components mentioned above).

The presence in the combustion products of such a gas, or gases, has thus been found to be indicative or characteristic of the early stages of incomplete combustion of a sample, since such gas tends to be produced before the combustion conditions become sufficiently poor that soot starts to be formed. By providing a detector which is capable of sensing the presence of such a gas in the combustion products, a combustion analyser, in which it is possible to detect incomplete combustion before soot is formed, has been achieved.

A gas, or selection of gases, indicative of incomplete combustion is selected as a target gas to be detected by a target gas sensor. The target gas sensor may be exposed to combustion products, either during combustion or following combustion of a sample. When the target gas is sensed by the target gas sensor, a signal is generated by the target gas sensor, indicating that incomplete combustion of the sample is taking/has taken place. As a result, the operating conditions of the combustion analyser can be modified, as desired. For example, combustion of that sample could be stopped; combustion of that sample could be slowed down, to increase the combustion efficiency; or the combustion products from that sample could be vented to waste instead of passing on to a conditioning stage, detection stage, or the like. Since such target gases are typically produced before incomplete sample combustion leads to the production of soot, the combustion analyser can be substantially protected against serious contamination, by taking evasive action before soot has actually been produced.

The invention provides the advantages of relatively straightforward and early detection of incomplete combustion of a sample. This allows for the identification of potentially erroneous analysis results and the prevention of contamination of the analyser due to soot production.

Downstream of the combustion chamber, there is typically a combustion products processing means for receiving and processing the combustion products. This may include, as desired, one or more gas conditioning units and one or more detectors. Preferably, the target gas sensor is disposed upstream of the combustion products processing means. Preferably still, the target gas sensor is disposed substantially immediately downstream of the combustion chamber. In this way, incomplete combustion of a sample can be detected before the combustion products pass on to the more contamination-sensitive combustion products processing means. It is thereby possible to take mitigating action before soot production, or at least before consequent contamination of the processing means, has taken place.

Alternatively, target gas detection may take place during the sample-combusting step. The combustion chamber can be divided into a combustion region and a target gas detection region. The sample is combusted in the combustion region, then the at least partially combusted sample is passed out to the detection region - such as a side loop from the combustion chamber - for target gas detection. If the target gas is detected, then corrective action can be taken. After passing over the target gas sensor, the at least partially combusted sample can be passed back into the combustion region, to undergo further combustion, so that uncombusted sample not only has a further opportunity to be combusted, but the combustion conditions may be improved relative to the first time through the combustion region.

Preferably, the gas sensor is a combustible gas sensor. The combustible gas sensor may be of electronic or catalytic type. Such sensors are capable of detecting very low concentrations (at ppm levels) of combustible gases. Preferably, the target gas is a combustible gas, such as one or more of carbon monoxide, methane, methanal and methanol.

Advantageously, the signal generated by the target gas sensor and read by the controller, which can adjust an operating condition of the combustion analyser in response thereto. For example, the controller may operate a valve downstream of the sensor to redirect the incompletely combusted sample away from a combustion products line for downstream processing (e.g., conditioning and/or sample constituent detection), and into a waste line for waste disposal. Thus, contamination of the components of the processing means can be avoided or reduced.

Alternatively/additionally, the rate of supply of sample and/or oxygen to the combustion chamber may be adjusted, to improve the combustion efficiency. For example, the sample supply rate may be reduced, or the oxygen supply rate may be increased, to increase the ratio of oxygen to sample in the combustion chamber. Alternatively or additionally, both supply rates may be reduced, so that an overall lower rate of fluid flow through the analyser is achieved.

One extreme example of this is to stop the supply of sample completely, to prevent contamination in situations where relative flow rate adjustments may not take effect quickly enough.

When an incomplete combustion condition is detected for a particular sample, whether the combustion analysis procedure for that sample then involves stopping immediately, adjusting relative flow rates, venting combustion products to waste, or a combination of the above, it may be desirable or necessary to perform a cleaning operation. In severe cases, this may mean dismantling components for cleaning. However, where the sensor has detected a target gas in time to prevent such contamination, it may be that only the combustion chamber has some degree of sooting. Accordingly, before starting to analyse a new sample, the controller may effect a 'self-clean' operation, whereby only oxygen is pumped into the combustion chamber for a set period of time. Any soot in the combustion chamber can thereby be relatively easily burned off.

A combustion analyser may be assembled with the above target gas sensor from manufacture, or a target gas sensor module may be retrofitted to an existing analyser. Alternatively, the target gas sensor module may be formed as an outlet tube portion on a combustion chamber, to form an integral unit.

According to the invention, there is also provided a method of combustion analysing a sample in a combustion analyser comprising a combustion chamber, the method comprising the steps of: supplying the sample to the combustion chamber; combusting the sample to produce combustion products; and detecting in the combustion products a target gas characteristic of incomplete combustion of the sample by a target gas sensor; characterised in that the method comprises determining whether incomplete combustion of the sample has occurred by receiving at a controller a signal indicative of incomplete combustion from the target gas sensor and adjusting an operating condition of the combustion analyser in response to the received signal.

The term combustion products is used here to mean any substances present in the combustion analyser during or following the combusting step and this may include the sample and other substances, such as oxygen or a carrier gas, and their respective constituents, both in precombustion and post-combustion forms, whether fully or incompletely combusted.

Other preferred features and advantages of the invention are set out in the description and in the dependent claims which are appended hereto.

The invention may be put into practice in a number of ways and some embodiments will now be described, by way of non-limiting example only, with reference to the following figures, in which:
Figure 1 shows a schematic layout of a typical, prior art combustion analyser;
Figure 2 shows a schematic layout of a target gas sensor arrangement according to one embodiment of the invention; and
Figure 3 shows a graph of the exemplary response of a target gas sensor with increasing sample injection speed.

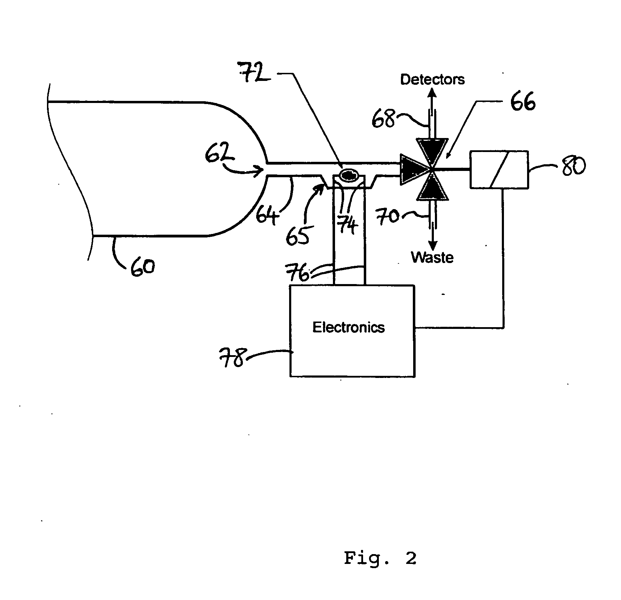

Referring to figure 2, there is schematically shown a target gas sensor arrangement installed in a combustion analyser, in accordance with one embodiment of the invention. A combustion chamber or furnace 60 has one or more inlet ports (not shown) for receiving a supply of a sample and a supply of oxygen. A supply of argon may also be provided, if desired. The combustion chamber 60 is heated by a heater (not shown) disposed about the chamber, so that temperatures inside the chamber are suitable for combustion of the sample to take place. Combustion products formed in the combustion chamber 60 pass out of the chamber through an outlet port 62, into a combustion products line 64. The combustion products line 64 leads to an electrically actuated three-way valve 66, which may be operated to switch the connection of the combustion products line between a downstream processing line 68 and a downstream waste line 70.

Along the processing line 68 is disposed one or more combustion products processing devices (not shown), such as a gas conditioner, a detector, or a combination of one or more of these. The processing device(s) employed in the combustion analyser depends on the sample and the type of analysis to be performed, as will be well understood.

The waste line 70 carries undesired combustion products away from the combustion products line 64 for waste disposal of the combustion products. Such waste disposal may involve simply venting the gases to the surroundings, or may involve passing the gases through one or more waste conditioning units (not shown) to remove, or convert to harmless products, any hazardous gases in the combustion products.

Installed in the combustion products line 64 substantially immediately following the combustion chamber is a target gas sensor 72. The target gas sensor 72 is positioned so that the combustion products travelling along the combustion products line 64 pass over the sensor, which is therefore able to detect the presence of a target gas in the combustion products. In this embodiment, the target gas sensor 72 is received within a recess 65 in the combustion products line 64 for seating the sensor. Connector pins, or wires, 74 pass from the sensor 72, through the wall of the combustion products line 64, and connect to wires 76 which themselves are connected to an electronic controller 78.

The controller 78 is also connected to an actuator 80, which operates the valve 66 to switch a fluid path from the combustion products line 64 into either the processing line 68 or the waste line 70. The controller 78 is arranged to control the actuator 80 in response to a signal generated by the target gas sensor 72 and received by the controller.

During combustion analysis of a sample, a supply of the sample and a supply of oxygen are provided to the heated combustion chamber 60, so that the sample is combusted therein. Depending on the combustion conditions, the sample may be either completely or incompletely combusted. Under sufficiently poor combustion conditions, where there is a serious oxygen deficiency, soot may be produced in the combustion chamber 60. Absent any intervention, the combustion products, including soot, would pass out of the combustion chamber 60, through the combustion products line 64 and into the processing line 68. As a result, any gas conditioners and detectors, through which the combustion products would pass, would become contaminated by the soot and in need of cleaning.

However, in the early stages of incomplete combustion, before soot is actually produced, a number of gases indicative of the incomplete combustion are typically produced in the combustion products. The gas(es) produced may include, among others, carbon monoxide, methane, methanal/formaldehyde, and methanol. A specific gas, or selection of gases, characteristic of incomplete combustion is therefore chosen as the target gas to be detected by the target gas sensor 72. As the combustion products enter the combustion products line 64, the sensor 72 is exposed to the various combustion product gases and senses the presence of the target gas. A signal is generated by the target gas sensor 72 and received by the controller 78, which then takes evasive or corrective action. As a result, an operating condition of the combustion analyser can be modified, as desired.

In the embodiment of figure 2, the controller 78 instructs the actuator 80 to operate to switch the valve 66 so that the combustion products line 64 is no longer in fluid communication with the processing line 68, but becomes connected to the waste line 70. In this way, the redirected combustion products are prevented from contaminating sensitive gas conditioners or detectors and are instead disposed of as waste. Since the target gas is generally produced before the incomplete combustion leads to soot formation, the combustion analyser can be effectively protected against serious contamination, by taking evasive action as soon as the target gas is detected.

Other action by the controller may additionally or alternatively be taken. The evasive or corrective action which may be taken by the controller following receipt of a signal indicative of incomplete combustion of a sample may include, among other possibilities, one or a combination of:
a) the above evasive action;
b) stopping the supply/injection of the sample into the combustion chamber 60, or withdrawing a sample crucible holding a solid sample using a solids introduction module;
c) reducing the supply rate of the sample into the combustion chamber; and
d) increasing the supply rate of oxygen into the combustion chamber.

In any case, in order to avoid the need for manual cleaning of the analyser, the potential soot production should preferably be confined to the combustion chamber 60, or at least upstream of the 'cold' parts of the analyser along the processing line 68.

It may be that, once injection of a sample which has not been completely combusted is finished, although downstream, 'cold' parts of the analyser have been protected by taking evasive or corrective action, some degree of sooting has taken place in the combustion chamber. This may relatively straightforwardly be burned off by supplying to the heated combustion chamber 60 sufficient oxygen to remove it. In one embodiment of the invention, the controller 78 is arranged to perform this self-cleaning operation automatically for a predetermined period when incomplete combustion of a first sample occurs, before a second sample is supplied to the combustion analyser for analysis.

Without the target gas sensor 72, the risk of soot contamination of sensitive analyser parts resulting from incomplete combustion is high. This is especially problematic when the combustion analyser is set up automatically to run a large series of samples without operator supervision, such as overnight or over a weekend, as the whole series of results could have to be discarded. On the other hand, with the target gas sensor 72, incomplete combustion and/or soot production can be detected relatively early, so that evasive or corrective action may be quickly taken and only the results (if any are actually recorded before the intervention) for the incompletely combusted sample need be discarded. That sample may, if appropriate, be combustion analysed again under modified combustion conditions, as set out above.

Once a signal indicative of incomplete combustion is received by the controller 78 from the target gas sensor 72, due to the risk of contamination of downstream analyser parts, it is preferable simply to redirect the combustion products to waste rather than continue to process them for sample component detection. However, if the operating conditions can be modified sufficiently fast to achieve substantially complete combustion (or, at any rate, much improved combustion efficiency) before soot production has begun to occur, then it may be appropriate in some circumstances to continue to pass the combustion products into the processing line 68 for analysis.

Either way, the target gas sensor 72 may be used to track the level of target gas in the combustion products while the remainder of the sample (undergoing incomplete combustion) is supplied to the combustion chamber, in order to determine whether a particular change to the operating conditions improves the combustion efficiency and thereby reduces the target gas level. In this way, adjustments may be made to the operating conditions while combustion products from an incompletely combusted sample are redirected to waste, so that the next time that sample is combustion analysed, a more suitable set of operating conditions may be known and used, to improve the combustion efficiency for that sample.

In a preferred embodiment of the invention, the target gas sensor is provided by a combustible gas sensor, either of the electronic or catalytic type. Such sensors are capable of detecting very low concentrations - down to ppm levels - of combustible gases and operate by producing an electrical signal representative of the amount of combustible gas at their sensing elements. These sensors are generally capable of operating with a substantially linear relationship between target gas concentration and sensor output and with relatively low power consumption. These types of sensor are presently used as safety devices, for example as gas leak detectors, and in control systems, for example in automotive engines. Combustible gas sensors are widely available and relatively inexpensive.

A catalytic combustible gas sensor comprises an electrically resistive wire, typically platinum, embedded in a small bead of a suitable metal oxide, such as silica, which has been treated with a combustion promoting catalyst, such as platinum, palladium or thorium. A current passed through the wire heats the bead to a desired temperature, typically between 400°C and 600°C. Changes in the resistance of the wire are monitored to provide a measure of change in the bead temperature. When the sensor is installed in the combustion products line 64 of a combustion analyser and subjected to a flow of combustion products not including a combustible gas which the sensor is configured to detect, the bead will reach a particular, substantially steady-state, temperature. The resistance of the wire then remains substantially constant. When the target gas for the sensor is present in the combustion products, the target gas is oxidised at the relatively low temperature as indicated above, at the surface of and due to the catalyst (i.e. the bead). This results in a rise in temperature of the bead and corresponding rise in resistance of the electrical wire, which is detected by the controller 78 as a change in the sensor signal, the level of which is indicative of the amount of target gas being detected.

An electronic combustible gas sensor comprises a relatively thin, micro-crystal layer of a suitable metal oxide, such as tin oxide (SnO₂) or tungsten oxide (WO₃), on an electrically heated substrate, such as a ceramic. The substrate is typically heated to around 400°C. Oxygen, which is adsorbed between crystal boundaries of the micro-crystal layer, forms a potential barrier, restricting the electrical current flowing through the crystal layer, depending on the amount of adsorbed oxygen. Changes in the current are monitored to provide a measure of change in the amount of oxygen which is adsorbed by the micro-crystal layer. When the sensor is installed in the combustion products line 64 of a combustion analyser and subjected to a flow of combustion products not including a combustible gas which the sensor is configured to detect, the current flowing through the micro-crystal layer will reach a particular, substantially steady-state, value. When the target gas for the sensor is present in the combustion products, the target gas acts as a deoxidising gas, in that it is oxidised at the sensor and removes some of the adsorbed oxygen from the micro-crystal layer. As a result, the electrical resistance of the micro-crystal layer decreases and a higher current can flow through the layer. This is detected by the controller 78 as a change in the sensor signal, the level of which is indicative of the amount of target gas being detected.

Effectively, then, the micro-crystal layer acts as a deoxidising gas-sensitive variable resistor. The conductivity of the sensor increases in the presence of a target gas, depending on the concentration of the target gas. The change in conductivity is converted to an output signal which corresponds to the target gas concentration.

Both catalytic and electronic combustible gas sensors can be used as the target gas sensor 72 in a combustion analyser. An electronic combustible gas sensor is capable of detecting incomplete combustion of a sample prior to the actual production of soot, with relatively quick response times. A catalytic combustible gas sensor is also capable of detecting incomplete combustion of a sample prior to the actual production of soot. However, the response times for some catalytic sensors may not be considered fast enough to be effective in the early detection of incomplete combustion. For this reason, the electronic-type sensors are generally preferred.

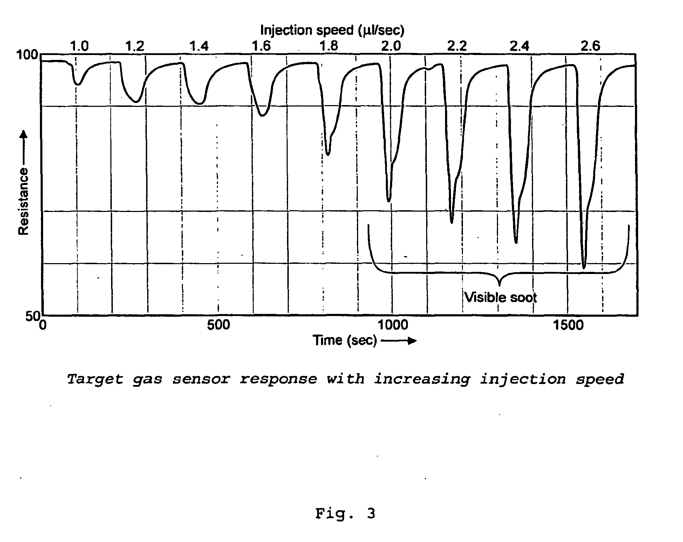

An example of the response of an electronic combustible gas sensor, when used as a target gas sensor in a combustion analyser, is shown in figure 3. To obtain this graph, a model number TGS2610 combustible gas sensor, manufactured by Figaro Engineering Inc. of Osaka, Japan, was installed in the gas flow line coming from a combustion chamber. Commercially available sensors are typically delivered in a housing which may be straightforwardly installed in a gas line. For example, the TGS2610 is supplied in a standard "TO-5" package and may be mounted in a gas line by O-ring sealing. Also, the connecting wire passages are integrated into this housing and no special measures are generally required to protect and/or seal them.

To prevent possible contamination of downstream components, the gas flow line was connected to a waste line for waste disposal of the combustion products after their flowing over the target gas sensor. A series of nine 100 µl/s sample injections of xylene into the combustion chamber was performed, with the injection speeds ranging from 1.0 µl/s to 2.6 µl/s, in 0.2 µl/s increments. The time allocated to each sample injection procedure was approximately 3 minutes, although, of course, the time taken actually to inject the samples ranged from between around 35 s and 100 s, within each time window.

As can be seen from the graph in figure 3, the measured sensor resistance signal when no target gas was detected was around 98 on the arbitrary resistance scale. For injection speeds from 1.0 µl/s to 1.6 µl/s, the sensor response showed a gradually decreasing value for the minimum resistance level for each sample, from around 95 to 88 on the resistance scale. This resulted from a decreasing concentration of oxygen in the combustion products for the different sample injections. Since the sensor relies on the adsorption/desorption of oxygen, the sensor is somewhat sensitive to changes in oxygen concentration in the gas flow over it. The change in oxygen concentration affecting the sensor signal here can be explained as follows. Oxygen, along with argon, is generally fed continuously and with a constant flow rate through the combustion analyser. Thus, when no sample is injected, the combustible gas sensor sees only oxygen and becomes saturated with it, resulting in a high resistance reading. If a sample is being injected, a proportion of the oxygen is consumed in the combustion process. Then, due to the lower partial oxygen pressure, adsorbed oxygen is slowly released (desorbed) by the sensor, resulting in a lower resistance reading. If a combustible gas is present in the combustion products, the adsorbed oxygen is removed by combustion in a much faster process than with the (diffusion-limited) desorption, as discussed below.

At the injection speed of 1.8 µl/s, the minimum resistance level reached during the injection procedure was around 81 on the resistance scale. This represents a significant decrease in resistance as compared with the slower sample injection procedures and indicates the presence of a target gas (combustible gas) in the combustion products. As such, at this injection speed, the combustion conditions in the combustion chamber led to detectable incomplete combustion of the sample. However, with this 1.8 µl/s sample injection, no visible soot formation occurred. Thus the electronic combustible gas sensor was able to register a signal indicating incomplete sample combustion before such incomplete combustion resulted in sooting.

At injection speeds above 2.0 µl/s, the sensor continued to generate an ever-decreasing resistance signal, continuing to indicate incomplete combustion, but with the presence of increasing concentrations of target gas in the combustion products. For each of these sample injections, visible soot formation in the combustion chamber was observed.

Thus it has been shown that an electronic combustible gas sensor can be installed in the combustion products line of a combustion analyser to detect the presence of a combustible target gas in the combustion products. In particular, it has been shown that such a sensor is able to generate a measurement signal indicating the occurrence of incomplete sample combustion before soot production has begun. In this way, when the combustion conditions in a combustion chamber deteriorate - as simulated by the above experiment - this may be detected by the sensor and resolved, before contamination of the analyser has occurred. Changes in the sensor output can also be used to identify potentially erroneous sample analysis results, even where no visible or optical indication of there being a problem is observable.

The Figaro TGS2610 sensor is the preferred target gas sensor. This sensor is understood to have a quick gas response, low power consumption, long life and to be relatively small. The sensor is particularly suitable for detecting methane, ethane and/or propane as the target gas. Of course, other electronic combustible gas sensors, catalytic combustible gas sensors, or indeed other, suitable target gas sensors may be employed, sourced from either Figaro Engineering Inc. or another manufacturer. For example, other sensors which are available are able specifically to target carbon monoxide. Still others are able to target more than one target gas, either simultaneously or by operating the sensing element at different temperatures, for greater specificity towards one or other of the target gases. The suitability of any particular target gas sensor can be determined by applying to it an experiment of the type discussed above, in relation to figure 3.

A target gas sensor arrangement in accordance with the invention may be incorporated into a combustion analyser at original assembly, or may be retrofitted to existing analysers with relative ease. The target gas sensor may be pre-installed in a small gas line/tube portion, with its connector pins/wires extending through the line wall, ready for connection to a controller. If desired, the tube portion may be fitted with an actuatable valve at its downstream end, so that a controller may switch the flow path away from a processing line of a combustion analyser and into a waste line, as described above. The tube portion with the target gas sensor (and optional redirection valve) form a target gas sensor module, which may simply be inserted into a combustion analyser, preferably immediately after the combustion chamber and before the combustion products processing device(s). Operation of the instrument would then be as previously described.

Alternatively, the combustion chamber may be manufactured with an outlet tube portion, in which the target gas sensor is installed, so that the combustion chamber and target gas sensor are provided as an integrated unit.

In order best to take evasive or corrective action when incomplete combustion takes place, the target gas sensor should be located as closely as possible to the combustion chamber, on its downstream side. With some target gas sensors, it may be possible to position the sensor within the combustion tube itself, near to its outlet port, but due to the high temperatures reached in the chamber, such an arrangement is generally not seen as practical.

One alternative arrangement, according to a further embodiment, is as follows. The combustion chamber is configured with a first chamber/region in which a sample and oxygen are received for at least partial combustion of the sample. The first chamber/region feeds into transfer tubing, which leads the at least partially combusted sample outside the combustion chamber to a 'side loop', in which the target gas sensor is installed. From there, the gases are led back into the combustion chamber, to a second chamber/region, in which further combustion of the sample can take place. In this arrangement, combustion conditions can be altered quickly, after detection of the target gas by the sensor in the transfer tubing, so that the combustion conditions in the second chamber/region can be improved for more efficient combustion therein. Alternatively, it may simply be that this arrangement provides more time between detection of a target gas and passage of the incompletely combusted products to the downstream, contamination-sensitive processing device(s), so that the products may be diverted to waste in time before any have been able to pass down the processing gas line. Generally, the option of dynamically adjusting the operating conditions in the second chamber/region may be of interest when a relatively low level of incomplete combustion is detected by the target gas sensor; otherwise, redirecting the combustion products to waste may be preferable.

Although the embodiment of figure 2 shows a recess 65 in the combustion products line 64 for seating the target gas sensor 72, this need not be provided. The line 64 may remain substantially tubular or may take any number of suitable forms. Such possible variations will be readily appreciated by the skilled person.

Although the above embodiments use one target gas sensor, and although some sensors are able to detect more than one target gas, it may be desirable in some applications to use more than one sensor. This may be for simultaneous detection of different target gases, or for monitoring the combustion products at different locations within the combustion analyser, or simply for redundancy.

The target gas sensor arrangement of the invention can be used to assist in method development for a combustion analyser. For example, the arrangement may be used to determine an acceptable efficiency of combustion of a sample, by the following method. A sample and oxygen are supplied to the combustion chamber at respective sample and oxygen flow rates and the sample is combusted to produce combustion products. The target gas sensor is used to detect in the combustion products a target gas characteristic of incomplete combustion of the sample and to generate a signal representative thereof for receipt by a controller. If the received signal is not at a predetermined, acceptable value, or within a predetermined, acceptable range of values, the controller adjusts the relative proportion of oxygen to sample supplied to the combustion chamber. This process takes place iteratively until the signal received by the controller is at the predetermined value, or within the predetermined range of values.

Such a method can be helpful in determining a maximum or optimum sample to oxygen ratio for a class of samples to be analysed. The relative flow rates of sample and oxygen into the combustion chamber can be adjusted up or down until the target gas sensor signal passes below/above, or reaches, a predetermined value (which value may be zero or substantially zero).

The invention may be employed for various applications in, for example, the chemical, refinery, hydrocarbon, petrochemical, and food and beverage sectors. The invention may be used in the analysis of solid, high-viscosity, liquid or gaseous samples. In particular, the invention may be used in the analysis of refinery products, such as gasoline and diesels.

## Claims

1. A combustion analyser for combustion analysing a sample, the analyser comprising:
a combustion chamber (60) for receiving a sample for combustion therein to form combustion products; and
a target gas sensor (72) for sensing in the combustion products a target gas characteristic of incomplete combustion of the sample;
**characterised in that** the analyser comprises a controller (78) arranged for receiving a signal indicative of incomplete combustion from the target gas sensor and for adjusting an operating condition of the combustion analyser in response to the received signal.

2. The analyser of claim 1, further comprising a combustion products processing means for receiving and processing the combustion products downstream of the combustion camber, wherein the target gas sensor (72) is disposed upstream of the combustion products processing means.

3. The analyser of claim 1 or 2, wherein the target gas sensor (72) is disposed substantially immediately downstream of the combustion chamber (60).

4. The analyser of claim 1 or 2, wherein the combustion chamber (60) comprises:
a sample combustion region in which combustion of a sample may take place, the region comprising:
a first, sample combustion portion for receiving a sample for combustion therein; and
a second, sample combustion portion for receiving combustion products comprising at least a partially combusted sample for further combustion therein; and
a transfer conduit connecting the first portion to the second portion and extending outside the sample combustion region,
wherein the target gas sensor (72) is disposed in the transfer conduit.

5. The analyser of any of the preceding claims, wherein the gas sensor (72) is a combustible gas sensor.

6. The analyser of any of the preceding claims, wherein the gas sensor (72) is an electronic combustible gas sensor.

7. The analyser of any of claims 1 to 5, wherein the gas sensor (72) is a catalytic combustible gas sensor.

8. The analyser of any of the preceding claims, wherein the target gas is a combustible gas.

9. The analyser of claim 8, wherein the target gas is one or more of carbon monoxide, methane, methanal, and methanol.

10. The analyser of any one of the preceding claims, further comprising a valve (66) disposed downstream of the target sensor (72) and switchable between a first, processing line (68) for receiving combustion products for downstream processing thereof, and a second, waste line (70) for receiving combustion products for waste disposal thereof, wherein the valve (66) is controlled by the controller (78) and the controller (78) is arranged to switch the valve (66) from the first line (68) to the second line (70) following receipt of the signal indicative of incomplete combustion.

11. The analyser of claim 10, further comprising an introduction apparatus for supplying a sample at a sample supply rate, and for supplying oxygen at an oxygen supply rate, into the combustion chamber (60), wherein the introduction apparatus is arranged to be controlled by the controller (78) to stop the sample supply and/or to adjust the oxygen supply rate following receipt by the controller (78) of the signal indicative of incomplete combustion.

12. A method of combustion analysing a sample in a combustion analyser comprising a combustion chamber (60), the method comprising the steps of:
supplying the sample to the combustion chamber (60);
combusting the sample to produce combustion products; and
detecting in the combustion products a target gas characteristic of incomplete combustion of the sample by a target gas sensor (72);
**characterised in that** the method comprises determining whether incomplete combustion of the sample has occurred by receiving at a controller (78) a signal indicative of incomplete combustion from the target gas sensor (72) and adjusting an operating condition of the combustion analyser in response to the received signal.

13. The method of claim 12, further comprising the step of processing the combustion products, wherein the detecting step takes place before the processing step.

14. The method of claim 12 or 13, wherein the detecting step takes place substantially immediately after the combusting step.

15. The method of claim 12 or 13, wherein the detecting step takes place during the combusting step.

16. The method of claim 15, wherein the combusting step takes place in a sample combustion region and the detecting step takes place in a target gas detection region and further comprising the step of, before the detecting step, passing the combustion products comprising at least a partially combusted sample from the combustion region to the target gas detection region.

17. The method of claim 16, further comprising the step of, after the detecting step, passing the combustion products from the target gas detection region back to the combustion region.

18. The method of any of claims 12 to 17, wherein the detecting step comprises passing the combustion products over a target gas sensor.

19. The method of claim 18, wherein the gas sensor is an electronic combustible gas sensor.

20. The method of claim 18, wherein the gas sensor is a catalytic combustible gas sensor.

21. The method of any of claims 12 to 20, wherein the target gas is a combustible gas.

22. The method of claim 21, wherein the target gas is one or more of carbon monoxide, methane, methanal, and methanol.

23. The method of any of claims 12 to 22, further comprising the step of, following determination of incomplete combustion of the sample having occurred, redirecting the combustion products to a waste line (70) for waste disposal thereof.

24. The method of any of claims 12 to 23, wherein the sample is supplied to the combustion chamber (60) at a sample supply rate, and further comprising the steps of:
supplying oxygen to the combustion chamber (60) at an oxygen supply rate; and
following determination of incomplete combustion of the sample having occurred, adjusting an operating condition of the combustion analyser by stopping the sample supply to the combustion chamber (60) and/or adjusting the oxygen supply rate.

## Patentansprüche

1. Verbrennungsanalysator zur Verbrennungsanalyse einer Probe, wobei der Analysator Folgendes umfasst:
eine Verbrennungskammer (60) zum Empfang einer Probe zur Verbrennung darin unter Bildung von Verbrennungsprodukten; und
einen Zielgassensor (72) zur Erfassung einer Zielgaseigenschaft unvollständiger Verbrennung der Probe in den Verbrennungsprodukten;
**dadurch gekennzeichnet, dass** der Analysator eine Steuerung (78) umfasst, die zum Empfang eines eine unvollständige Verbrennung anzeigenden Signals von dem Zielgassensor und zur Einstellung eines Betriebszustands des Verbrennungsanalysators als Reaktion auf das empfangene Signal angeordnet ist.

2. Analysator nach Anspruch 1, der weiterhin ein Mittel zur Verarbeitung von Verbrennungsprodukten zum Empfangen und Verarbeiten der Verbrennungsprodukte stromabwärts der Verbrennungskammer umfasst, wobei der Zielgassensor (72) stromaufwärts des Mittels zur Verarbeitung von Verbrennungsprodukten angeordnet ist.

3. Analysator nach Anspruch 1 oder 2, wobei der Zielgassensor (72) im Wesentlichen unmittelbar stromabwärts der Verbrennungskammer (60) angeordnet ist.

4. Analysator nach Anspruch 1 oder 2, wobei die Verbrennungskammer (60) Folgendes umfasst:
einen Probenverbrennungsbereich, in dem die Verbrennung einer Probe stattfindet, wobei der Bereich:
einen ersten Probenverbrennungsabschnitt zum Empfang einer Probe zur Verbrennung darin; und
einen zweiten Probenverbrennungsabschnitt zum Empfang von Verbrennungsprodukten, die mindestens eine teilweise verbrannte Probe umfassen, zur weiteren Verbrennung darin, umfasst; und
eine Übertragungsleitung, die den ersten Abschnitt mit dem zweiten Abschnitt verbindet und sich außerhalb des Probenverbrennungsbereichs erstreckt,
wobei der Zielgassensor (72) in der Übertragungsleitung angeordnet ist.

5. Analysator nach einem der vorhergehenden Ansprüche, wobei der Gassensor (72) ein Sensor für brennbare Gase ist.

6. Analysator nach einem der vorhergehenden Ansprüche, wobei der Gassensor (72) ein elektronischer Sensor für brennbare Gase ist.

7. Analysator nach einem der Ansprüche 1 bis 5, wobei der Gassensor (72) ein katalytischer Sensor für brennbare Gase ist.

8. Analysator nach einem der vorhergehenden Ansprüche, wobei das Zielgas ein brennbares Gas ist.

9. Analysator nach Anspruch 8, wobei das Zielgas Kohlenmonoxid und/oder Methan und/oder Methanal und/oder Methanol ist.

10. Analysator nach einem der vorhergehenden Ansprüche, der weiterhin ein Ventil (66) umfasst, das stromabwärts des Zielsensors (72) angeordnet und zwischen einer ersten Verarbeitungslinie (68) zum Empfang von Verbrennungsprodukten zu deren stromabwärtiger Verarbeitung und einer zweiten Abfalllinie (70) zum Empfang von Verbrennungsprodukten zu deren Abfallentsorgung schaltbar ist, wobei das Ventil (66) durch die Steuerung (78) gesteuert wird und die Steuerung (78) dazu angeordnet ist, das Ventil (66) nach Empfang des eine unvollständige Verbrennung anzeigenden Signals von der ersten Linie (68) zur zweiten Linie (70) zu schalten.

11. Analysator nach Anspruch 10, der weiterhin eine Einführungsvorrichtung zur Zuführung einer Probe mit einer Probenzuführrate und zur Zuführung von Sauerstoff mit einer Sauerstoffzuführrate in die Verbrennungskammer (60) umfasst, wobei die Einführvorrichtung dazu angeordnet ist, durch die Steuerung (78) gesteuert zu werden, um die Probenzuführung anzuhalten und/oder die Sauerstoffzuführrate einzustellen, nachdem die Steuerung (78) das eine vollständige Verbrennung anzeigende Signal erhalten hat.

12. Verfahren zur Verbrennungsanalyse einer Probe in einem Verbrennungsanalysator, der eine Verbrennungskammer (60) umfasst, wobei das Verfahren die folgenden Schritte umfasst:
Zuführen der Probe zur Verbrennungskammer (60);
Verbrennen der Probe zur Erzeugung von Verbrennungsprodukten; und
Detektieren einer Zielgaseigenschaft unvollständiger Verbrennung der Probe in den Verbrennungsprodukten durch einen Zielgassensor (72);
**dadurch gekennzeichnet, dass** das Verfahren das Feststellen, ob eine unvollständige Verbrennung der Probe erfolgt ist, indem an einer Steuerung (78) ein eine unvollständige Verbrennung anzeigendes Signal von dem Zielgassensor (72) empfangen wird und ein Betriebszustand des Verbrennungsanalysators als Reaktion auf das empfangene Signal eingestellt wird, umfasst.

13. Verfahren nach Anspruch 12, das weiterhin den Schritt des Verarbeitens der Verbrennungsprodukte umfasst, wobei der Detektionsschritt vor dem Verarbeitungsschritt stattfindet.

14. Verfahren nach Anspruch 12 oder 13, wobei der Detektionsschritt im Wesentlichen unmittelbar nach dem Verbrennungsschritt stattfindet.

15. Verfahren nach Anspruch 12 oder 13, wobei der Detektionsschritt während des Verbrennungsschritts stattfindet.

16. Verfahren nach Anspruch 15, wobei der Verbrennungsschritt in einem Probenverbrennungsbereich stattfindet und der Detektionsschritt in einem Zielgasdetektionsbereich stattfindet, und weiterhin mit dem Schritt des Leitens der mindestens eine teilweise verbrannte Probe enthaltenden Verbrennungsprodukte vor dem Detektionsschritt von dem Verbrennungsbereich zu dem Zielgasdetektionsbereich.

17. Verfahren nach Anspruch 16, das weiterhin den Schritt des Leitens der Verbrennungsprodukte von dem Zielgasdetektionsbereich zu dem Verbrennungsbereich zurück nach dem Detektionsschritt umfasst.

18. Verfahren nach einem der Ansprüche 12 bis 17, wobei der Detektionsschritt das Leiten der Verbrennungsprodukte über einen Zielgassensor umfasst.

19. Verfahren nach Anspruch 18, wobei der Gassensor ein elektronischer Sensor für brennbare Gase ist.

20. Verfahren nach Anspruch 18, wobei der Gassensor ein katalytischer Sensor für brennbare Gase ist.

21. Verfahren nach einem der Ansprüche 12 bis 20, wobei das Zielgas ein brennbares Gas ist.

22. Verfahren nach Anspruch 21, wobei das Zielgas Kohlenmonoxid und/oder Methan und/oder Methanal und/oder Methanol ist.

23. Verfahren nach einem der Ansprüche 12 bis 22, das weiterhin den Schritt des Umleitens der Verbrennungsprodukte zu einer Abfalllinie (70) zu deren Abfallentsorgung nach erfolgtem Schritt der Feststellung einer unvollständigen Verbrennung umfasst.

24. Verfahren nach einem der Ansprüche 12 bis 23, wobei die Probe der Verbrennungskammer (60) mit einer Probenzuführrate zugeführt wird, und weiterhin mit den folgenden Schritten:
Zuführen von Sauerstoff zu der Verbrennungskammer (60) mit einer Sauerstoffzuführrate; und
nach erfolgter Feststellung einer unvollständigen Verbrennung der Probe Einstellen eines Betriebszustands des Verbrennungsanalysators durch Anhalten der Probenzuführung zu der Verbrennungskammer (60) und/oder Einstellen der Sauerstoffzuführrate.

## Revendications

1. Analyseur de combustion destiné à analyser la combustion d'un échantillon, l'analyseur comprenant :
une chambre de combustion (60) pour accueillir un échantillon en vue de sa combustion dans celle-ci afin de former des produits de combustion ; et
un détecteur de gaz cible (72) pour détecter dans les produits de combustion un gaz cible caractéristique d'une combustion incomplète de l'échantillon ;
**caractérisé en ce que** l'analyseur comprend un contrôleur (78) agencé de manière à recevoir un signal indicatif d'une combustion incomplète provenant du détecteur de gaz cible et pour régler les conditions de fonctionnement de l'analyseur de combustion en réponse au signal reçu.

2. Analyseur selon la revendication 1, comprenant en outre des moyens de traitement des produits de combustion destinés à accueillir et à traiter les produits de combustion en aval de la chambre de combustion, le détecteur de gaz cible (72) étant disposé en amont des moyens de traitement des produits de combustion.

3. Analyseur selon la revendication 1 ou 2, le détecteur de gaz cible (72) étant disposé sensiblement dans une position immédiatement en aval de la chambre de combustion (60).

4. Analyseur selon la revendication 1 ou 2, la chambre de combustion (60) comprenant :
une région de combustion d'échantillon dans laquelle peut se produire la combustion d'un échantillon, la région comprenant :
une première partie de combustion d'échantillon destinée à accueillir un échantillon en vue de sa combustion ; et
une deuxième partie de combustion d'échantillon destinée à accueillir des produits de combustion comprenant au moins un échantillon ayant subi une combustion partielle en vue d'une combustion supplémentaire dans celle-ci ; et
un conduit de transfert reliant la première partie à la deuxième partie et s'étendant à l'extérieur de la région de combustion d'échantillon,
le détecteur de gaz cible (72) étant disposé dans le conduit de transfert.

5. Analyseur selon l'une quelconque des revendications précédentes, le détecteur de gaz (72) étant un détecteur de gaz combustible.

6. Analyseur selon l'une quelconque des revendications précédentes, le détecteur de gaz (72) étant un détecteur électronique de gaz combustible.

7. Analyseur selon l'une quelconque des revendications 1 à 5, le détecteur de gaz (72) étant un détecteur catalytique de gaz combustible.

8. Analyseur selon l'une quelconque des revendications précédentes, le gaz cible étant un gaz combustible.

9. Analyseur selon la revendication 8, le gaz cible étant un ou plusieurs des gaz monoxyde de carbone, méthane, méthanal et méthanol.

10. Analyseur selon l'une quelconque des revendications précédentes, comprenant en outre une vanne (66) disposée en aval du détecteur de gaz cible (72) et commutable entre une première canalisation de traitement (68) afin d'accueillir les produits de combustion en vue de leur traitement en aval, et une deuxième canalisation d'évacuation (70) afin d'accueillir les produits de combustion en vue de leur évacuation en tant que déchets, la vanne (66) étant commandée par le contrôleur (78) et le contrôleur (78) étant agencé de manière à commander la commutation de la vanne (66) entre la première canalisation (68) et la deuxième canalisation (70) en réponse à la réception d'un signal indicatif d'une combustion incomplète.

11. Analyseur selon la revendication 10, comprenant en outre un dispositif d'introduction destiné à alimenter dans la chambre de combustion (60) un échantillon à un taux d'alimentation d'échantillon et de l'oxygène à un taux d'alimentation d'oxygène, le dispositif d'introduction étant agencé de manière à être commandé par le contrôleur (78) pour couper l'alimentation d'échantillon et/ou pour régler le taux d'alimentation d'oxygène en réponse à la réception par le contrôleur (78) d'un signal indicatif d'une combustion incomplète.

12. Procédé pour analyser la combustion d'un échantillon dans un analyseur de combustion comprenant une chambre de combustion (60), le procédé comprenant les étapes :
d'alimentation de l'échantillon dans la chambre de combustion (60) ;
de combustion de l'échantillon pour former des produits de combustion ; et
de détection dans les produits de combustion d'un gaz cible caractéristique d'une combustion incomplète de l'échantillon, la détection étant réalisée par un détecteur de gaz cible (72) ;
**caractérisé en ce que** le procédé comprend la confirmation de la présence d'une combustion incomplète de l'échantillon par la réception au contrôleur (78) d'un signal indicatif d'une combustion incomplète transmis par le détecteur de gaz cible (72) et le réglage d'une condition de fonctionnement de l'analyseur de combustion en réponse au signal reçu.

13. Procédé selon la revendication 12, comprenant en outre l'étape de traitement des produits de combustion, l'étape de détection ayant lieu avant l'étape de traitement.

14. Procédé selon la revendication 12 ou 13, l'étape de détection ayant lieu pour l'essentiel immédiatement après l'étape de traitement.

15. Procédé selon la revendication 12 ou 13, l'étape de détection ayant lieu durant l'étape de traitement.

16. Procédé selon la revendication 15, l'étape de combustion ayant lieu dans une région de combustion d'échantillon et l'étape de détection ayant lieu dans une région de détection de gaz cible, le procédé comprenant en outre, avant l'étape de détection, une étape de transfert des produits de combustion comprenant au moins un échantillon ayant subi une combustion partielle de la région de combustion d'échantillon à la région de détection de gaz cible.

17. Procédé selon la revendication 16, comprenant en outre, après l'étape de détection, une étape de transfert des produits de combustion de la région de détection de gaz cible à la région de combustion.

18. Procédé selon l'une quelconque des revendications 12 à 17, l'étape de détection comprenant le passage des produits de combustion sur un détecteur de gaz cible.

19. Procédé selon la revendication 18, le détecteur de gaz étant un détecteur électronique de gaz combustible.

20. Procédé selon la revendication 18, le détecteur de gaz étant un détecteur catalytique de gaz combustible.

21. Procédé selon l'une quelconque des revendications 12 à 20, le gaz cible étant un gaz combustible.

22. Procédé selon la revendication 21, le gaz cible étant un ou plusieurs des gaz monoxyde de carbone, méthane, méthanal et méthanol.

23. Procédé selon l'une quelconque des revendications 12 à 22, comprenant en outre, après la confirmation d'une combustion incomplète de l'échantillon, une étape de transfert des produits de combustion à une canalisation d'évacuation (70) en vue de leur évacuation en tant que déchets.

24. Procédé selon l'une quelconque des revendications 12 à 23, l'échantillon étant alimenté dans la chambre de combustion (60) à un taux d'alimentation d'échantillon et le procédé comprenant en outre les étapes :
d'alimentation d'oxygène à un taux d'alimentation d'oxygène dans la chambre de combustion (60), et
après la confirmation d'une combustion incomplète de l'échantillon, de réglage d'une condition de fonctionnement de l'analyseur de combustion en coupant l'alimentation d'échantillon dans la chambre de combustion (60) et/ou en réglant le taux d'alimentation d'oxygène.
